# EUROPEAN PATENT APPLICATION

(11) **EP 4 779 425 A1**
(43) Date of publication of application: **22.07.2026**
(21) Application number: 24864009.6
(22) Date of filing: 08.03.2024
(51) Int. Cl.: G05D 1/43

(54) **PATH PLANNING METHOD AND APPARATUS, AND SNOWPLOW**

(30) Priority: 11.09.2023 CN 202311172351
(71) Applicant: Shenzhen Hanyang Technology Co., Ltd., Shenzhen, Guangdong 518000 (CN)
(72) Inventor: HUANG, Yang, Shenzhen, Guangdong 518000 (CN); YE, Hanwen, Shenzhen, Guangdong 518000 (CN); ZHENG, Chuwei, Shenzhen, Guangdong 518000 (CN)
(74) Representative: Abel & Imray LLP
(86) International application number: PCT/CN2024/080707
(87) International publication number: WO 2025/055282

(57) **Abstract**

Disclosed are a method and apparatus for planning path, and a snow sweeper. The method includes: acquiring a snow throwing location and a current location of an automatic snow sweeper in a snow sweeping map; determining a snow throwing direction of the automatic snow sweeper based on the snow throwing location and the current location; planning a snow sweeping path conforming to a preset rule in the snow sweeping map based on the snow throwing direction; and controlling, based on the snow sweeping path, the automatic snow sweeper to automatically travel.

## Description

### CROSS-REFERENCE TO RELATED APPLICATIONS

The present disclosure claims the benefit of priority to Chinese Patent Application No. 202311172351.6, filed with the China National Intellectual Property Administration on September 11, 2023 and entitled "METHOD AND APPARATUS FOR PLANNING PATH, AND SNOW SWEEPER", which is incorporated in its entirety herein by reference.

### TECHNICAL FIELD

The present disclosure relates to the technical field of automatic snow sweepers, and particularly relates to a method and apparatus for planning a path, and a snow sweeper.

### BACKGROUND

In the prior art, operators control operation of snow sweepers and guide the moving directions in most cases, and then snow clearing paths are determined. The inventors realize that such conventional methods have some obvious limitations.

Since the snow sweepers rely on manual operation, intelligent path planning is unachievable. The manual operation is likely to be affected by personal experience and skills of the operators, so selection of snow clearing paths is less systematical and scientific. Under the conditions of complex weather and terrains, it is difficult for the operators to comprehensively consider various factors. As a result, snow clearing paths cannot be optimally planned, leading to inefficiency and resource waste.

The above content only assists in understanding of the technical solutions of the present disclosure, and does not mean that the above content is recognized as the prior art.

### SUMMARY

A main objective of the present disclosure is to provide a method and apparatus for planning a path, and a snow sweeper, to solve the technical problem that intelligent path planning cannot be achieved in the prior art since a snow sweeper relies on manual operation.

To achieve the above objective, the present disclosure provides a method for planning a path. The method for planning a path includes steps as follows:
acquiring a snow throwing location and a current location of the automatic snow sweeper in a snow sweeping map;
determining a snow throwing direction of the automatic snow sweeper based on the snow throwing location and the current location;
planning a snow sweeping path conforming to a preset rule in the snow sweeping map based on the snow throwing direction; and
controlling, based on the snow sweeping path, the automatic snow sweeper to automatically travel.
In addition, to achieve the above objective, the present disclosure further provides an apparatus for planning a path. The apparatus for planning a path includes:
a location acquiring module configured to acquire a snow throwing location and a current location of an automatic snow sweeper in a snow sweeping map;
a direction acquiring module configured to determine a snow throwing direction of the automatic snow sweeper based on the snow throwing location and the current location;
a path acquiring module configured to plan a snow sweeping path conforming to a preset rule in the snow sweeping map based on the snow throwing direction; and
a traveling performing module configured to control, based on the snow sweeping path, the automatic snow sweeper to automatically travel.

In addition, to achieve the above objective, the present disclosure further provides a snow sweeper. The snow sweeper includes: a traveling device, a snow removing device, a vehicle body device, and one or more control devices. The one or more control devices include a memory, a processor, and a path planning program stored on the memory and capable of being run on the processor. The path planning program is configured to implement steps as follows:
acquiring a snow throwing location and a current location of the automatic snow sweeper in a snow sweeping map;
determining a snow throwing direction of the automatic snow sweeper based on the snow throwing location and the current location;
planning a snow sweeping path conforming to a preset rule in the snow sweeping map based on the snow throwing direction; and
controlling, based on the snow sweeping path, the automatic snow sweeper to automatically travel.

According to the present disclosure, a snow throwing location and a current location of an automatic snow sweeper in a snow sweeping map are acquired. A snow throwing direction of the automatic snow sweeper is determined based on the snow throwing location and the current location. A snow sweeping path conforming to a preset rule is planned in the snow sweeping map based on the snow throwing direction. The automatic snow sweeper is controlled, based on the snow sweeping path, to automatically travel. Thus, the snow sweeping path is optimally planned by the automatic snow sweeper, and snow sweeping efficiency of the automatic snow sweeper is improved.

The details of one or more embodiments of the present disclosure are put forward in the following figures and descriptions, and other features and advantages of the present disclosure become apparent from the description, accompanying drawings, and claims.

### BRIEF DESCRIPTION OF DRAWINGS

FIG. 1 is a schematic structural diagram of a snow sweeper according to a solution of an embodiment of the present disclosure;
FIG. 2 is a schematic structural diagram of a control device of a hardware running environment according to a solution of an embodiment of the present disclosure;
FIG. 3 is a flowchart based on Embodiment 1 of a method for planning a path according to the present disclosure;
FIG. 4 is a flowchart based on Embodiment 2 of a method for planning a path according to the present disclosure;
FIG. 5 is a schematic diagram based on rasterization and potential field method in Embodiment 2 of a method for planning a path according to the present disclosure;
FIG. 6 is a flowchart based on Embodiment 3 of a method for planning a path according to the present disclosure; and

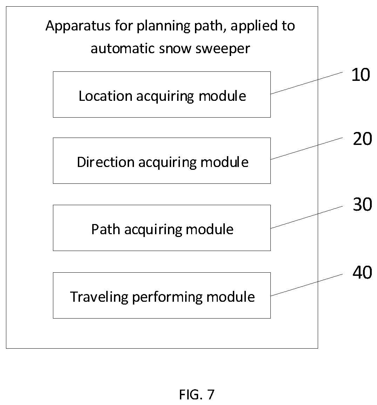

FIG. 7 is a structural block diagram based on Embodiment 1 of an apparatus for planning a path according to the present disclosure.

The implementation of the objectives, functional features, and advantages of the present disclosure are further described in combination with the embodiments and with reference to the accompanying drawings.

### DETAILED DESCRIPTION

It should be understood that the particular embodiments described herein are merely used for explaining the present disclosure and are not used for limiting the present disclosure.

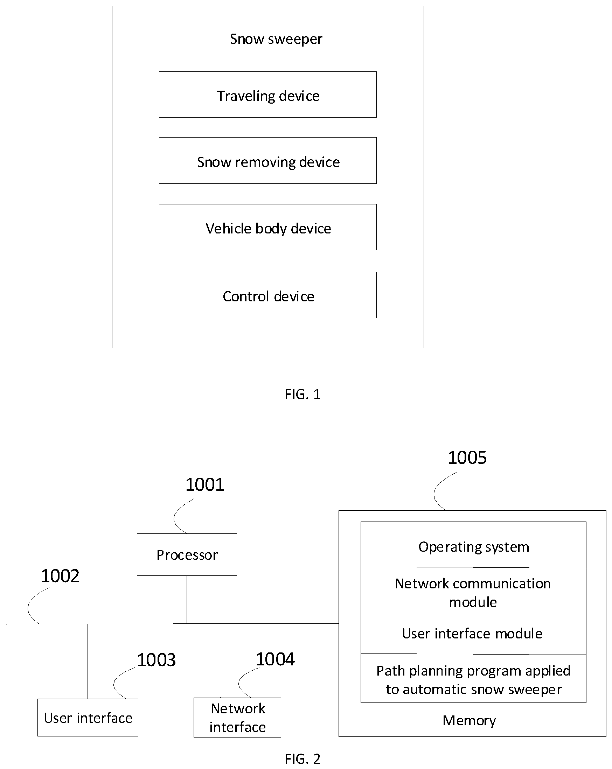

With reference to FIG. 1, a schematic structural diagram of a snow sweeper according to a solution of an embodiment according to the present disclosure is shown in FIG. 1.

With reference to FIG. 2, a schematic structural diagram of a control device of a hardware running environment according to a solution of an embodiment according to the present disclosure is shown in FIG. 2.

As shown in FIG. 2, the control device may include a processor 1001, such as a central processing unit (CPU), a communication bus 1002, a user interface 1003, a network interface 1004, and a memory 1005. The communication bus 1002 is configured to implement connection communication between these components. The user interface 1003 may include a display. The user interface 1003 may alternatively include a standard wired interface and a standard wireless interface. The wired interface of the user interface 1003 may be a universal serial bus (USB) interface in the present disclosure. The network interface 1004 may alternatively include a standard wired interface or a standard wireless interface (such as, a Wireless-Fidelity (WI-FI) interface). The memory 1005 may be a high-speed random access memory (RAM), or a nonvolatile memory (NVM), such as a disk memory. The memory 1005 may alternatively be a storage apparatus independent of the processor 1001.

A person skilled in the art can understand that the structure shown in FIG. 2 constitutes no limitation on the control device. The control device may include more or fewer components than those shown in the figure, or combinations of some components, or different component arrangements.

As shown in FIG. 2, the memory 1005, as a computer storage medium, may include an operating system, a network communication module, a user interface module, and a path planning program.

In the control device shown in FIG. 2, the network interface 1004 is mainly configured to be connected to a background server to perform data communication with the background server. The user interface 1003 is mainly configured to be connected to a peripheral. A path planning device invokes a path planning program stored in the memory 1005 by the processor 1001 to perform the method for planning a path provided in the embodiments of the present disclosure.

Based on the above hardware structure, the embodiments of the method for planning a path in the present disclosure are provided.

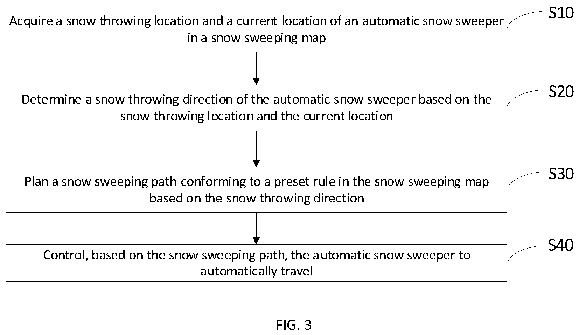

With reference to FIG. 3, a flowchart of Embodiment 1 of a method for planning a path according to the present disclosure is shown in FIG. 3. Embodiment 1 of the method for planning a path in the present disclosure is provided.

In Embodiment 1, the method for planning a path includes steps as follows:
Step S10, a snow throwing location and a current location of an automatic snow sweeper in a snow sweeping map are acquired.

It should be noted that a performing subject of the embodiment may be a control device having functions of data processing, network communication, and program running. The control device is configured to control the snow sweeper. The snow sweeper further includes a traveling device, a snow removing device, and a vehicle body device. The control device can be understood as a controller of the automatic snow sweeper.

It can be understood that the snow throwing location refers to a particular location on the map to which snow is thrown after the automatic snow sweeper completes a snow clearing operation. This location may be preset or dynamically determined according to a requirement of a snow clearing task. The snow throwing location may be selected in consideration of a surrounding environment, a building, a road, and other factors, to ensure that no adverse effect is produced on surroundings through snow throwing.

It should be understood that the current location refers to a geographical location at which the automatic snow sweeper is located in real time when the snow sweeping task is performed. By carrying a sensor, the snow sweeper can accurately acquire its coordinates on the map, to keep accurately sensing its location in an entire working process.

In a particular implementation, the automatic snow sweeper can acquire information of the snow throwing location and a current location of the automatic snow sweeper in the snow sweeping map by carrying various sensors or devices, such as a global positioning system (GPS), a lidar, and a camera. These sensors can accurately capture the location of the machine on the map and information of surroundings.

It can be understood that the automatic snow sweeper can determine the snow throwing location according to an edge location in the snow sweeping map. In a case of determining according to environmental information that a portion of an edge-most location in the snow sweeping map is a non-working region, the portion can be regarded as the snow throwing location. For example, an edge-most location in the environmental information that is far away from a house and located in the snow sweeping map is regarded as the snow throwing location.

It should be noted that an inertial measurement unit (IMU) sensor in the automatic snow sweeper can collect slope in ground information, and the snow throwing location is determined based on the slope. In a case that snow is not deep, the ground having a greater slope may cause the snow to roll. A snow throwing location determined in this case may be the flat ground. The snow throwing location on the flat ground may be determined through a visual sensor rather than the IMU sensor. The ground is recognized to be on the same straight line through the visual sensor.

Step S20, a snow throwing direction of the automatic snow sweeper is determined based on the snow throwing location and the current location.

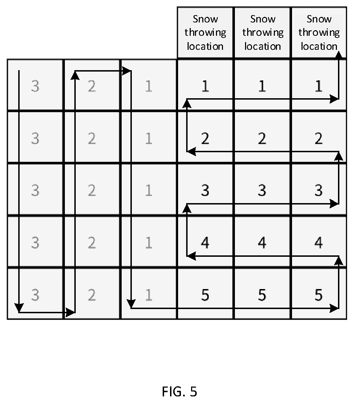

It should be noted that the snow throwing direction refers to a direction of a snow throwing chute. When rasterization is performed on the snow sweeping map, a direction of the snow throwing chute of the automatic snow sweeper corresponding to each grid can be obtained according to the snow throwing direction. During snow sweeping, the snow throwing chute of the automatic snow sweeper is controlled to be in a right direction of the snow throwing chute. Specifically, rasterization on the snow sweeping map means that the snow sweeping map is divided into a plurality of grids, and a corresponding potential energy value is set for each grid through Breadth-First Search (BFS) algorithm. For example, as shown in a right half of FIG. 5, a potential energy value of a grid in which the snow throwing location is can be set as 0. Each time the snow throwing location spreads outwards one layer, a potential energy value of a grid corresponding to the layer increases by 1. Finally, a potential energy value distribution image shown in the right half of FIG. 5 is formed.

Step S30, a snow sweeping path conforming to a preset rule is planned in the snow sweeping map based on the snow throwing direction.

It should be noted that the snow sweeping path conforming to the preset rule may include a path having high or low potential energy or a path blocked by an obstacle (the path includes a path affected by a connected domain or a path blocked by a static or dynamic obstacle). The high or low potential energy refers to a distance between the automatic snow sweeper and the snow throwing location (the farther the distance, the greater the potential energy of snow throwing) and direction (the more the machine deviates from the snow throwing location, the greater the potential energy of the snow throwing). An effect of a connected domain means that normal zigzag-shaped sweeping of the machine is blocked by an obstacle having a larger area in a working region, then a plurality of subregions are formed in the working region, and each region may have at least one connected domain. For example, the right half of FIG. 5 and the left half of FIG. 5 are two subregions respectively. A boundary between a region having a grid potential energy value of 5 in the right half of FIG. 5 and a region having a grid potential energy value of 1 in the left half of FIG. 5 is a connected domain. In this case, when traveling, the machine first travels from a higher potential energy region to a lower potential energy region in the left half of FIG. 5. Finally, a shortest path to the right half of FIG. 5 is determined based on a location of the connected domain. Then, the machine is prevented from traveling along too many invalid paths.

Step S40, the automatic snow sweeper is controlled, based on the snow sweeping path, to automatically travel.

It should be noted that a zigzag-shaped path is used as the snow sweeping path of the automatic snow sweeper. Traveling along this path, the machine body can move from a higher potential energy region to a lower potential energy region after the snow throwing location is determined (Specifically, the outer ring of the snow throwing location is swept first. Snow in the snow throwing outer ring is thrown to an inner ring of the snow throwing location. A region in which snow is not capable of being thrown to a snow accumulating location is swept first. The snow is thrown into an unswept region. Finally, a region in which snow is capable of being thrown to the snow accumulating location is swept.), such that the snow falls to the snow throwing location.

It should be understood that a snow sweeping method of the automatic snow sweeper in the embodiment is to roll snow by a snow rolling blade, throw the snow by a snow throwing blade, and finally throw the snow by a snow throwing chute to a snow throwing location set by a user. Thus, a snow throwing direction at each location is required to be considered for path planning. All snow in a working region is accumulated at the snow throwing location through the path planning.

It should be noted that after an obstacle blocks snow from being thrown to the snow throwing location, the snow can be thrown to an unswept region in which snow can be rightly thrown to the snow throwing location. Then the snow is thrown to the snow throwing location through this region. Or a plurality of subregions can be formed in the working region. Then the snow is thrown to the snow throwing location through the connected domains between regions.

It can be understood that after partition, if one region is too small to allow the machine to work or has an obstacle blocking the snow from being thrown to the snow throwing location, snow removing work in this region may not be performed.

In Embodiment 1, a snow throwing location and a current location of an automatic snow sweeper in a snow sweeping map are acquired. A snow throwing direction of the automatic snow sweeper is determined based on the snow throwing location and the current location. A snow sweeping path conforming to a preset rule is planned in the snow sweeping map based on the snow throwing direction. The automatic snow sweeper is controlled, based on the snow sweeping path, to automatically travel. Thus, the snow sweeping path is optimally planned by the automatic snow sweeper, and snow sweeping efficiency of the automatic snow sweeper is improved.

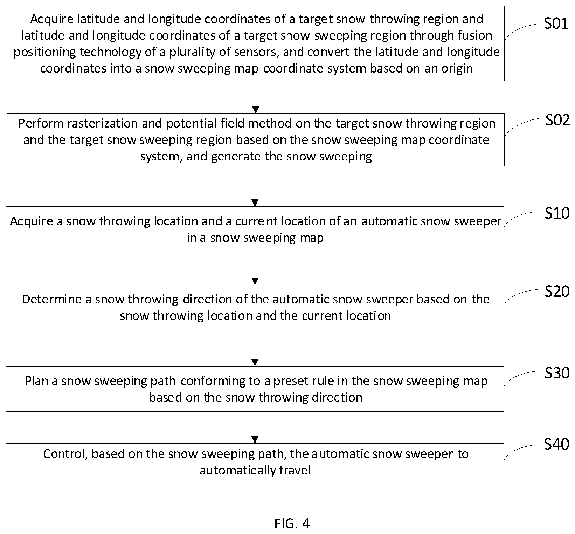

With reference to FIG. 4, a flowchart of Embodiment 2 of a method for planning a path according to the present disclosure is shown in FIG. 4. Based on Embodiment 1 shown in FIG. 3, Embodiment 2 of the method for planning a path in the present disclosure is provided.

In Embodiment 2, before step S10, the method further includes:
Step S01, latitude and longitude coordinates of a target snow throwing region and latitude and longitude coordinates of a target snow sweeping region are acquired through fusion positioning technology of a plurality of sensors, and the latitude and longitude coordinates are converted into a snow sweeping map coordinate system based on an origin.

It should be noted that the automatic snow sweeper includes a communication module. The communication module can acquire movement information transmitted by a mobile device. After the automatic snow sweeper moves to a designated location through the movement information, the snow sweeping map of the automatic snow sweeper is formed through realtime kinematic (RTK)-odometry-inertial measurement unit (IMU) fusion positioning technology. The movement information refers to information for controlling the automatic snow sweeper to move after manually operation on the mobile device (handle). The snow sweeping map is configured to subsequently plan a path after the automatic snow sweeper is positioned.

In a particular implementation, the automatic snow sweeper is controlled by a handle or an application (app)-control machine (the handle performs wireless communication control or the app-control machine performs cloud server control) to travel. A GPS-RTK base station transmits positioning information to a cloud server, and the current automatic snow sweeper transmits positioning information to the cloud server. The cloud server acquires a difference by combining the two pieces of positioning information, to obtain latitude, longitude, and a heading angle of the automatic snow sweeper, that is, positioning of the automatic snow sweeper. The positioning is recorded to form a snow sweeping map. In addition, in the embodiment, a noncloud (local) method can be preferentially used: the GPS-RTK base station transmits positioning information to the machine through lora wireless communication. The machine acquires a difference by combining its own positioning and the positioning of the base station, to obtain accurate positioning of the current machine (the positioning includes the latitude, the longitude, and the heading angle). In addition, a charging point can be set, and a two-dimensional coordinate system covering the snow sweeping region is generated with the charging point as an origin. Thus, the generated snow sweeping map can be visualized.

Step S02, rasterization and potential field method are performed on the target snow throwing region and the target snow sweeping region based on the snow sweeping map coordinate system, and the snow sweeping map is generated.

It should be noted that in a snow sweeping strategy for a single region, rasterization and potential field method are performed on the target snow throwing region and the target snow sweeping region. Specifically, 1. rasterization: a minimum circumscribed rectangle of a sweeping region is found, a coordinate system is established with a lower left corner as an origin and a length and a width of the rectangle as an x-axis and a y-axis, and rasterization is performed on the sweeping region. Coordinate system unit 1 is equivalent to actual 0.3 m, and a central point of each grid is a target point of machine traveling. To ensure that automatic planning can be started near an edge of the snow sweeping region, a number of grids are enlarged by distances based on the minimum circumscribed rectangle. 2. Potential field method on map: since the snow sweeping method is to throw snow by the machine and finally accumulate the snow in the snow throwing location, the potential energy of the snow throwing location is marked as the lowest, and the further the location away from the snow throwing location, the greater the potential energy. A potential energy value is added to each grid according to this criterion. A traveling route of the machine is from a higher potential energy location to a lower potential energy location. Moreover, in the snow throwing direction at each location, snow is thrown towards a lower potential energy location. In this way, it can be ensured that snow is finally concentrated at a lower potential energy location, that is, the snow throwing location. 3. After the potential field method on the map, a category (a swept region, an unswept region, a forbidden region, and a snow throwing location) of a grid is marked, and a series of connected snow throwing grids are bound together to be marked as a group. According to an upper boundary, a lower boundary, a left boundary, and a right boundary of the group, a most suitable diffusing direction (a longest edge, for traveling along a straight line as long as possible and avoiding turning) for potential energy is found. Starting from a lowest row, grids in the same row are marked as the same potential energy, and the potential energy is gradually increasingly marked row by row in the diffusing direction (the reason for marking one row is to perform traveling along a straight line according to the same potential energy in subsequent route planning) until diffusion is performed to the boundaries. The diffusion is performed through Breadth-First Search algorithm. If once diffusion is performed to the entire region, the potential field method is completed. Otherwise, with grids at the diffusing boundaries as a new snow throwing location, the above steps are continued to be repeated until the diffusion is completed. In the diffusing process, snow throwing directions of all grids are marked at the same time. Generally, diffusion is performed to a front grid having low potential energy. 4. Route generation: the grids are traversed, a grid having maximum potential energy in the region is found, and the route is planned from the grid. Traveling is performed along grids having the same potential energy until the boundaries are reached. Then an adjacent grid having potential energy at one level lower is found, and whether a grid having greater potential energy exists adjacent to the grid is determined. If yes, a grid at a highest potential energy location is circularly found. A shortest sweeping route between a current sweeping location and an adjacent grid at a highest potential energy location is planned through Shortest Path Algorithm. The above steps are repeated until the sweeping route reaches the end. Moreover, whether an unswept region exists in the region is checked. If no, the route planning ends, otherwise, the above steps are repeated until all routes are planned.

Further, in the embodiment, the step that a snow sweeping path conforming to a preset rule is planned in the snow sweeping map based on the snow throwing direction includes: whether a plurality of snow sweeping regions exist in the snow sweeping map is determined; in a case that the plurality of snow sweeping regions exist, whether the plurality of snow sweeping regions form a connected domain is determined; in a case that the plurality of snow sweeping regions form the connected domain, a connecting route of regions through which two adjacent snow sweeping regions pass is determined; and the snow sweeping path conforming to the preset rule is planned in the snow sweeping map based on the snow throwing direction and the connecting route.

It should be understood that in a snow sweeping strategy for a plurality of sweeping regions, the strategy for the plurality of regions currently is to determine, through a disjoint set data structure, whether the regions form connected domains. The disjoint set data structure refers to a data structure configured to manage elements, and is generally configured to process merging and searching operations on sets. Each sweeping region is denoted as a node, and a connecting relationship between the sweeping regions can be managed by the disjoint set data structure. When connected, two regions can be regarded as a connected domain. If the connected domain is formed, a connecting route of regions through which two sweeping regions pass is found through Breadth-First Search (BFS) algorithm. Breadth-First Search (BFS) algorithm is a graph traversal algorithm, which has main features that nodes of a graph are traversed layer by layer from an initial node, to find a specific target node, and a shortest path from the initial node to the target node can be computed. In the embodiment, a shortest path between two sweeping regions is determined. Then, a sweeping strategy for a single region is still used as a sweeping strategy in a single region. The connecting route may be a route determined by a user himself/herself or a shortest path found by the machine based on the current location.

It should be noted that with reference to FIG. 5, a schematic diagram based on rasterization and potential field method in Embodiment 2 of a method for planning a path according to the present disclosure is shown in FIG. 5. Each cell in the figure is a grid. The figure is divided into two regions, and a junction between number 1 and number 5 is a connected domain. The greater the number, the greater the potential energy. In a planning process of snow sweeping, the snow sweeping robot first travels, in a zigzag shape, to a grid far away from the snow throwing location, throws snow to a grid close to the snow throwing location, and finally travels to the grid close to the snow throwing location. For example, the robot travels to 3-2-1 in a left region of the snow throwing location, then enters a right region from the connected domain between 1 and 5, and enters a designated snow throwing location along a path 5-4-3-2-1 to complete snow throwing.

In Embodiment 2, high-precision location information can be provided through the GPS-RTK positioning technology, such that the latitude and longitude coordinates of the target snow throwing region and the latitude and longitude coordinates of the snow sweeping region can be accurately captured. Through such high-precision positioning, it can be ensured that the generated snow sweeping map is highly consistent with an actual geographical environment, to provide an accurate basis for subsequent path planning and navigation. Rasterization and potential field method on the target region means that continuous geographical information is converted into discrete grids, and then potential field information is embedded into the discrete grids. Through such optimization, geographical features such as a terrain, an obstacle, and slope can be better captured, to provide more accurate data for path planning. Through the potential field method, interactions between objects can be simulated, such as obstacle avoidance, to make path planning more intelligent and flexible. The generated snow sweeping map can be presented in the form of grids or a potential field. Thus, an operator can visually understand geographical distribution of the target snow throwing region and the snow sweeping region, as well as a possible obstacle and a possible terrain feature. Through such visualization, an operator can be helped better understand a working environment, to provide support for subsequent planning and decision making. Based on the snow sweeping map subjected to the rasterization and the potential field method, an intelligent snow sweeping path can be generated through an advanced path planning algorithm and in combination with a terrain, an obstacle, an optimization strategy, and other factors. Through such path planning, the automatic snow sweeper can perform a snow clearing task more efficiently and accurately, to avoid unnecessary forward and backward movement and resource waste.

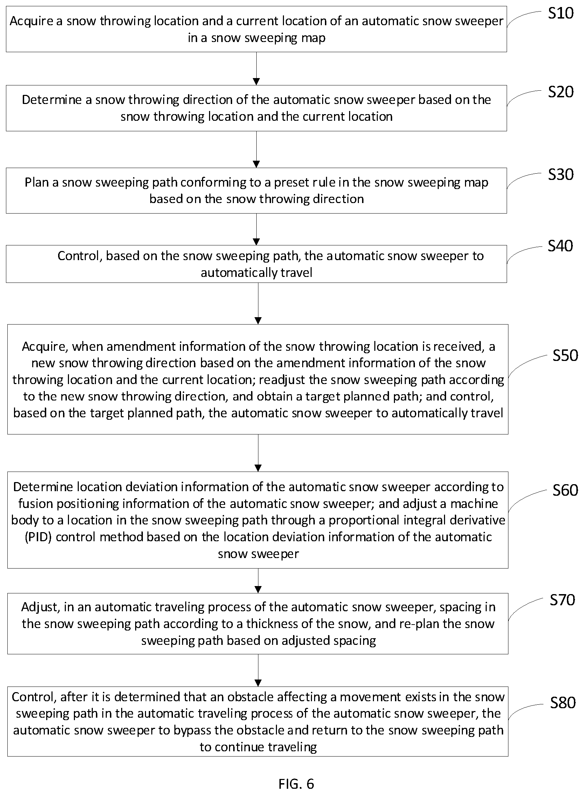

With reference to FIG. 6, a flowchart of Embodiment 3 of a method for planning a path according to the present disclosure is shown in FIG. 6. Based on Embodiment 1 shown in FIG. 3, Embodiment 3 of the method for planning a path in the present disclosure is provided.

In Embodiment 3, after step S40, the method further includes:
Step S50, when amendment information of the snow throwing location is received, a new snow throwing direction is acquired based on the amendment information of the snow throwing location and the current location; the snow sweeping path is readjusted according to the new snow throwing direction, and a target planned path is obtained; and the automatic snow sweeper is controlled to automatically travel based on the target planned path.

It should be noted that when or before the automatic snow sweeper travels, a user may be required to change a previous snow throwing location or the machine determines that the currents snow throwing location is no longer suitable for serving as the snow throwing location, a new snow throwing location is determined. A new snow throwing direction is generated based on the new snow throwing location and the current location point of the machine. Potential energy of each grid is determined in the snow sweeping map based on the new snow throwing direction. A target planned path is determined based on the potential energy of each grid, to determine that a new zigzag-shaped sweeping path is a reasonable and most efficient path.

In Embodiment 3, after step S40, the method further includes:
Step S60, location deviation information of the automatic snow sweeper is determined according to fusion positioning information of the automatic snow sweeper; and a machine body is adjusted to a location in the snow sweeping path through a proportional integral derivative (PID) control method based on the location deviation information of the automatic snow sweeper.

It should be noted that the fusion positioning information may be positioning information obtained based on various sensors and GPS-RTK.

It should be understood that in the traveling process of the automatic snow sweeper, a location deviation (that is, deviation from an original specified path) of a movement of the machine body may be caused due to snow on the ground. Thus, linear control over the machine body is required. The linear control means that considering that when driving along a road in a straight line, a person looks at a farther point on the forward route, it is ensured that the car can go along the straight line. Thus, it is also considered to adopt this method for the automatic snow sweeper.

In a particular implementation, the location of the robot is adjusted based on location deviation information and a proportional integral derivative (PID) control method. The location deviation information refers to deviation data formed relative to an original path direction. For example, a current moving direction of the automatic snow sweeper is direction 1, and a fixed direction in the path is direction 2. Thus, direction 1 is required to be adjusted to direction 2 by adjusting an angular velocity. In addition, in the adjusting process of the angular velocity, the linear velocity is also required to be adjusted. The greater the adjustment of the angular velocity (the adjustment is performed in a manner of turning in situ, the greater the adjustment angle, the greater the angular velocity), the less the adjustment of the linear velocity. Generally, a default linear velocity is 0.3 m/s, a maximum linear velocity is 0.4 m/s, and a minimum linear velocity is 0.2 m/s.

Further, the step that a machine body is adjusted to a location in the snow sweeping path through a proportional integral derivative (PID) control method based on the location deviation information of the automatic snow sweeper includes:
a deviation angle of the automatic snow sweeper is determined according to a current point of the automatic snow sweeper and a target point in the snow sweeping path;
a linear velocity and an angular velocity of the automatic snow sweeper are determined based on the deviation angle of the automatic snow sweeper; and
the location of the machine body in the snow sweeping path is adjusted based on the linear velocity and the angular velocity of the automatic snow sweeper.

It should be understood that the current point refers to the current location point of the automatic snow sweeper on the snow sweeping path. At the beginning, the location point is the starting point. The target point is the location point of the automatic snow sweeper required to reach a planned snow sweeping path.

More specifically, a control logic of the PID control method is as follows: it is assumed that a starting point (a current point) is A, a target point is B, a point of a machine is C, a projection point of point C on a straight line AB is C', a point of a target is D (D is on the target line AB, and has an adjustable distance of 0.2 m to 1 m from C'), an orientation angle of a vehicle body is phi, and a theta value controlled by pid is an angle between an orientation of the vehicle body and a target straight line CD, that is, a deviation value of the automatic snow sweeper is as follows: theta = A (a current heading angle of the machine) - B{CD}; an angular velocity is as follows: rev = Kp * theta + Ki * integral (integral of a deviation value) + Kd * derivative (a derivative of the deviation value); and a linear velocity is as follows: vel = preset maximum velocity * sqrt{1 - (rev /preset maximum angular velocity)^{2}}; and Kp, Ki, and Kd are parameters.

In Embodiment 3, after step S40, the method further includes:
Step S70, in an automatic traveling process of the automatic snow sweeper, spacing in the snow sweeping path is adjusted according to a thickness of the snow, and the snow sweeping path is re-planned based on adjusted spacing.

It should be noted that in a case of snow having a relatively large thickness, since it is relatively laborious to push the machine, spacing of zigzag-shaped sweeping in a planning path can be reduced, to facilitate traveling of the machine. In a case of snow having a relatively small thickness, the spacing of the zigzag-shaped sweeping in the planning path can be increased. In addition, a thickness of current snow can be determined through a current of a rolling shovel electric motor. The greater the thickness of the snow, the greater the required current. Maximum spacing of the zigzag-shaped sweeping of the automatic snow sweeper is equal to a width of a snow shovel head.

It should be understood that the spacing of the zigzag-shaped sweeping of the automatic snow sweeper can be adjusted by a user himself/herself. The thickness of the current snow can be determined by a visual sensor or a lidar. The visual sensor or lidar can identify a distance between two points on the same vertical plane, to determine the thickness of the current snow. A snow sweeping velocity can be adjusted according to the thickness of the snow. A large current of a snow rolling shovel indicates a large load. In this case, the velocity is required to be reduced, to ensure clean sweeping and no full-load overcurrent.

In Embodiment 3, after step S40, the method further includes:
Step S80, after it is determined that an obstacle affecting a movement exists in the snow sweeping path in the automatic traveling process of the automatic snow sweeper, the automatic snow sweeper is controlled to bypass the obstacle and return to the snow sweeping path to continue traveling.

It should be noted that the preset identifying device includes, but is not limited to, a visual sensor or a lidar or a millimeter wave radar. In the traveling process, an obstacle can be determined by the visual sensor or the lidar or the millimeter wave radar. In the embodiment, the obstacle can be determined by a collision sensor. Some obstacles may be hidden in the snow, and thus can be determined after collision in a traveling process of the robot. After the collision of the collision sensor, whether the obstacle belongs to a living object is determined through a visual sensor or a lidar or an infrared temperature sensor. In a case that the obstacle does not belong to a living object, the robot bypasses the obstacle to return to the planned path. In a case that the obstacle belongs to living objects, the movement is stopped. It can be understood that a living object is detected to prevent the machine from harming the living object, to ensure the safety of the machine. After the collision of the collision sensor, the collision sensor stops moving, and starts moving again after receiving confirmation information from a user.

Generally, a plurality of cameras (preset identifying devices) are arranged on the automatic snow sweeper, mounted at locations in a front portion, a left side, and a right side of the automatic snow sweeper respectively, and are configured to monitor environments in different directions. A specific method for determining whether a living object is a person through the cameras can be as follows: a pedestrian appears within 5 m (a preset distance) of the front camera, automatic planning is paused, a snow rolling shovel is stopped, and the machine reminders of pedestrian detection through voice. A pedestrian appears within 5 m of the left camera and snow is thrown to the left, the automatic planning is paused, the snow rolling shovel is stopped, and the machine reminders of pedestrian detection through voice. A pedestrian appears within 5 m of the right camera and snow is thrown to the right, the automatic planning is paused, the snow rolling shovel is stopped, and the machine sends a reminder of pedestrian detection through voice.

In Embodiment 3, when receiving amendment information of the snow throwing location, the automatic snow sweeper computes a new snow throwing direction based on the new information and the current location of the automatic snow sweeper. This can ensure that the machine operates according to a latest snow throwing requirement. Based on the new snow throwing direction, the snow sweeping path is readjusted to generate the target planned path. This can ensure coverage and uniformity of snow throwing such that snow can be effectively removed. Based on the target planned path, the automatic snow sweeper automatically travels. Through a built-in navigation and positioning system, the machine can sense its location in real time and adjust a traveling direction, speed, and trajectory, to ensure that the machine accurately travels along the planned path. In the automatic traveling process, the automatic snow sweeper adjusts its location based on the fusion positioning information, to maintain the accurate location of the machine in the snow sweeping path. Such RTK-odometry-IMU fusion positioning information may include a GPS, an inertial measurement unit (IMU), a speedometer, and other information. According to a thickness of snow, the automatic snow sweeper can dynamically adjust spacing in the snow sweeping path. If a snow layer is thick, the spacing can be appropriately increased to improve snow clearing efficiency. On the contrary, if the snow layer is thin, the spacing can be reduced to ensure that the snow can be completely removed. In the automatic traveling process, if an obstacle affecting a movement is detected, the automatic snow sweeper performs determination according to information from a sensor and bypasses the obstacle. Once bypassing the obstacle, the machine returns to the snow sweeping path to continue traveling, and maintains a planned snow clearing trajectory. Based on the above processes, the automatic snow sweeper can perform intelligent adjustment according to various information and situations, to implement an efficient, accurate, and autonomous snow sweeping task. Through such self-adaptability and flexibility, working efficiency can be improved in different snow clearing scenarios, and safety and reliability of a snow sweeping operation are ensured.

In addition, with reference to FIG. 6, the embodiments of the present disclosure further provide an apparatus for planning a path. The apparatus for planning a path includes:
a location acquiring module 10 configured to acquire a snow throwing location and a current location of an automatic snow sweeper in a snow sweeping map;
a direction acquiring module 20 configured to determine a snow throwing direction of the automatic snow sweeper based on the snow throwing location and the current location;
a path acquiring module 30 configured to plan a snow sweeping path conforming to a preset rule in the snow sweeping map based on the snow throwing direction; and
a traveling performing module 40 configured to control, based on the snow sweeping path, the automatic snow sweeper to automatically travel.

In the embodiment, a snow throwing location and a current location of an automatic snow sweeper in a snow sweeping map are acquired. A snow throwing direction of the automatic snow sweeper is determined based on the snow throwing location and the current location. A snow sweeping path conforming to a preset rule is planned in the snow sweeping map based on the snow throwing direction. The automatic snow sweeper is controlled, based on the snow sweeping path, to automatically travel. Thus, the snow sweeping path is optimally planned by the automatic snow sweeper, and snow sweeping efficiency of the automatic snow sweeper is improved.

For other embodiments or particular implementations of the apparatus for planning a path described in the present disclosure, reference can be made to the above embodiments of the method. Details are not repeated herein.

It should be noted that herein, terms "include", "comprise", "have", or any other variations thereof are intended to cover non-exclusive inclusions, such that a process, method, object or system including a series of elements not only include those elements, but also include other elements that are not explicitly listed, or further includes inherent elements of the process, method, object or system. In the absence of more restrictions, an element defined by statement "comprise a..." or "include a..." does not exclude other same element in a process, method, object or system that includes the element.

The above sequence numbers of the embodiments of the present disclosure are merely for description, and do not indicate advantages and disadvantages of the embodiments. In a unit claim in which several apparatuses are enumerated, several of these apparatuses may be specifically embodied by one same hardware item. The usage of first, second, third, and other words do not indicate any order, and these words may be interpreted as names.

Through the descriptions of the above implementations, a person skilled in the art can clearly learn that the methods in the above embodiments may be implemented by software plus a necessary general-purpose hardware platform, and certainly may be implemented by hardware. In many cases, the former is the better implementation. Based on the understanding, the technical solution of the present disclosure may be embodied in a form of a software product in essence or a part contributing to the prior art. The computer software product is stored in a storage medium (such as a read only memory image (ROM)/random access memory (RAM), a magnetic disk, and an optical disk), and includes several instructions for causing terminal user equipment (which may be a mobile phone, a computer, a server, an air conditioner, or a network user equipment, etc.) to perform the methods in all embodiments of the present disclosure.

The above embodiments are merely preferred embodiments of the present disclosure and do not limit the patent scope of the present disclosure. Equivalent structures or equivalent process changes made by using content of the description and accompanying drawings of the present disclosure or directly or indirectly applied in other related technical fields shall all fall within the patent protection scope of the present disclosure in a similar way.

## Claims

1. A method for planning a path, comprising:
acquiring a snow throwing location and a current location of an automatic snow sweeper in a snow sweeping map;
determining a snow throwing direction of the automatic snow sweeper based on the snow throwing location and the current location;
planning a snow sweeping path conforming to a preset rule in the snow sweeping map based on the snow throwing direction; and
controlling, based on the snow sweeping path, the automatic snow sweeper to automatically travel.

2. The method according to claim 1, wherein before the acquiring a snow throwing location and a current location of an automatic snow sweeper in a snow sweeping map, the method further comprises:
acquiring latitude and longitude coordinates of a target snow throwing region and latitude and longitude coordinates of a target snow sweeping region through fusion positioning technology of a plurality of sensors, and converting the latitude and longitude coordinates into a snow sweeping map coordinate system based on an origin; and
performing rasterization and potential field method on the target snow throwing region and the target snow sweeping region based on the snow sweeping map coordinate system, and generating the snow sweeping map.

3. The method according to claim 1, wherein the planning a snow sweeping path conforming to a preset rule in the snow sweeping map based on the snow throwing direction comprises:
determining whether a plurality of snow sweeping regions exist in the snow sweeping map;
determining, in a case that the plurality of snow sweeping regions exist, whether the plurality of snow sweeping regions form a connected domain;
determining, in a case that the plurality of snow sweeping regions form the connected domain, a connecting route of regions through which two adjacent snow sweeping regions pass; and
planning the snow sweeping path conforming to the preset rule in the snow sweeping map based on the snow throwing direction and the connecting route.

4. The method according to claim 1, wherein the controlling, based on the snow sweeping path, the automatic snow sweeper to automatically travel comprises:
controlling the automatic snow sweeper to automatically travel from a higher potential energy region to a lower potential energy region; and
the controlling the automatic snow sweeper to automatically travel from a higher potential energy region to a lower potential energy region comprises:
controlling the automatic snow sweeper to sweep an outer ring of the snow throwing location, and throwing snow on the outer ring of the snow throwing location to an inner ring of the snow throwing location; and
controlling the automatic snow sweeper to automatically travel from the higher potential energy region to the lower potential energy region in the inner ring of the snow throwing location.

5. The method according to claim 4, wherein the controlling the automatic snow sweeper to automatically travel from the higher potential energy region to the lower potential energy region in the inner ring of the snow throwing location comprises:
controlling the automatic snow sweeper to first sweep, in a manner of automatically traveling from the higher potential energy region to the lower potential energy region, a region in which snow is not capable of being thrown to a snow accumulating location, and throwing the snow to an unswept region in the inner ring of the snow throwing location; and
controlling the automatic snow sweeper to sweep, in a manner of automatically traveling from the higher potential energy region to the lower potential energy region, an unswept region in which snow is capable of being thrown to the snow accumulating location.

6. The method according to claim 1, wherein after the controlling, based on the snow sweeping path, the automatic snow sweeper to automatically travel, the method further comprises:
acquiring, when amendment information of the snow throwing location is received, a new snow throwing direction based on the amendment information of the snow throwing location and the current location;
readjusting the snow sweeping path according to the new snow throwing direction, and obtaining a target planned path; and
controlling, based on the target planned path, the automatic snow sweeper to automatically travel.

7. The method according to claim 1, wherein after the controlling, based on the snow sweeping path, the automatic snow sweeper to automatically travel, the method further comprises:
determining location deviation information of the automatic snow sweeper according to fusion positioning information of the automatic snow sweeper; and
adjusting a machine body to a location in the snow sweeping path through a proportional integral derivative (PID) control method based on the location deviation information of the automatic snow sweeper.

8. The method according to claim 7, wherein the adjusting a machine body to a location in the snow sweeping path through a PID control method based on the location deviation information of the automatic snow sweeper comprises:
determining a deviation angle of the automatic snow sweeper according to a current point of the automatic snow sweeper and a target point in the snow sweeping path;
determining a linear velocity and an angular velocity of the automatic snow sweeper based on the deviation angle of the automatic snow sweeper; and
adjusting the location of the machine body in the snow sweeping path based on the linear velocity and the angular velocity of the automatic snow sweeper.

9. The method according to claim 8, wherein the deviation angle is an angle between a current heading angle of the automatic snow sweeper and a target straight line; the target straight line is a connecting line between a first projection point of a location point of the automatic snow sweeper on a preset straight line and a second projection point of the target point on the preset straight line; and the preset straight line is a connecting line between a starting point of the automatic snow sweeper and the target point.

10. The method according to claim 1, wherein after the controlling, based on the snow sweeping path, the automatic snow sweeper to automatically travel, the method further comprises:
adjusting, in an automatic traveling process of the automatic snow sweeper, spacing in the snow sweeping path according to a thickness of the snow, and re-planning the snow sweeping path based on adjusted spacing.

11. The method according to claim 1, wherein after the controlling, based on the snow sweeping path, the automatic snow sweeper to automatically travel, the method further comprises:
controlling, after it is determined that an obstacle affecting a movement exists in the snow sweeping path in an automatic traveling process of the automatic snow sweeper, the automatic snow sweeper to bypass the obstacle and return to the snow sweeping path to continue traveling.

12. The method according to claim 1, wherein after the controlling, based on the snow sweeping path, the automatic snow sweeper to automatically travel, the method further comprises:
pausing the automatic snow sweeper after a pedestrian is identified by at least one of preset identifying devices at different locations of the automatic snow sweeper or/and after it is determined that snow is thrown to a location corresponding to the preset identifying device.

13. An apparatus for planning a path, comprising:
a location acquiring module configured to acquire a snow throwing location and a current location of an automatic snow sweeper in a snow sweeping map;
a direction acquiring module configured to determine a snow throwing direction of the automatic snow sweeper based on the snow throwing location and the current location;
a path acquiring module configured to plan a snow sweeping path conforming to a preset rule in the snow sweeping map based on the snow throwing direction; and
a traveling performing module configured to control, based on the snow sweeping path, the automatic snow sweeper to automatically travel.

14. The apparatus for planning a path according to claim 13, further comprising:
acquiring latitude and longitude coordinates of a target snow throwing region and latitude and longitude coordinates of a target snow sweeping region through fusion positioning technology of a plurality of sensors, and converting the latitude and longitude coordinates into a snow sweeping map coordinate system based on an origin; and
performing rasterization and potential field method on the target snow throwing region and the target snow sweeping region based on the snow sweeping map coordinate system, and generating the snow sweeping map.

15. The apparatus for planning a path according to claim 13, wherein the path acquiring module is further configured to:
determine whether a plurality of snow sweeping regions exist in the snow sweeping map;
determine, in a case that the plurality of snow sweeping regions exist, whether the plurality of snow sweeping regions form a connected domain;
determine, in a case that the plurality of snow sweeping regions form the connected domain, a connecting route of regions through which two adjacent snow sweeping regions pass; and
plan the snow sweeping path conforming to the preset rule in the snow sweeping map based on the snow throwing direction and the connecting route.

16. A snow sweeper, comprising: a traveling device, a snow removing device, a vehicle body device, and one or more control devices, wherein the one or more control devices comprise a memory, a processor, and a path planning program stored on the memory and capable of being run on the processor; and the path planning program is configured to implement steps as follows:
acquiring a snow throwing location and a current location of the automatic snow sweeper in a snow sweeping map;
determining a snow throwing direction of the automatic snow sweeper based on the snow throwing location and the current location;
planning a snow sweeping path conforming to a preset rule in the snow sweeping map based on the snow throwing direction; and
controlling, based on the snow sweeping path, the automatic snow sweeper to automatically travel.

17. The snow sweeper according to claim 16, wherein cameras are arranged at locations on a front portion, a left side, and a right side of the snow sweeper, and after the cameras detect a pedestrian, the control device controls the snow removing device to be stopped.

18. The snow sweeper according to claim 16, wherein the path planning program is configured to further implement steps as follows:
acquiring latitude and longitude coordinates of a target snow throwing region and latitude and longitude coordinates of a target snow sweeping region through fusion positioning technology of a plurality of sensors, and converting the latitude and longitude coordinates into a snow sweeping map coordinate system based on an origin; and
performing rasterization and potential field method on the target snow throwing region and the target snow sweeping region based on the snow sweeping map coordinate system, and generating the snow sweeping map.

19. The snow sweeper according to claim 16, wherein in a case of the planning a snow sweeping path conforming to a preset rule in the snow sweeping map based on the snow throwing direction, the path planning program is configured to implement steps as follows:
determining whether a plurality of snow sweeping regions exist in the snow sweeping map;
determining, in a case that the plurality of snow sweeping regions exist, whether the plurality of snow sweeping regions form a connected domain;
determining, in a case that the plurality of snow sweeping regions form the connected domain, a connecting route of regions through which two adjacent snow sweeping regions pass; and
planning the snow sweeping path conforming to the preset rule in the snow sweeping map based on the snow throwing direction and the connecting route.

20. The snow sweeper according to claim 16, wherein in a case of the controlling, based on the snow sweeping path, the automatic snow sweeper to automatically travel, the path planning program is configured to implement steps as follows:
controlling the automatic snow sweeper to automatically travel from a higher potential energy region to a lower potential energy region; and
the controlling the automatic snow sweeper to travel from a higher potential energy region to a lower potential energy region comprises:
controlling the automatic snow sweeper to sweep an outer ring of the snow throwing location, and throwing snow on the outer ring of the snow throwing location to an inner ring of the snow throwing location; and
controlling the automatic snow sweeper to travel from the higher potential energy region to the lower potential energy region in the inner ring of the snow throwing location.
